# EUROPEAN PATENT APPLICATION

(11) **EP 4 716 114 A1**
(43) Date of publication of application: **25.03.2026**
(21) Application number: 25203126.5
(22) Date of filing: 18.09.2025
(51) Int. Cl.: H04B 10/272, H04B 10/564

(54) **ENERGY-RECYCLING BURST MODE LASER DRIVER AND SYSTEM**

(30) Priority: 19.09.2024 US 202418889799
(71) Applicant: Nokia Solutions and Networks Oy, 02610 Espoo (FI)
(72) Inventor: Van Veen, Doutje, New Providence, 07974 (US); Borkowski, Robert, Murray Hill, 07974-0636 (US); Houtsma, Vincent, 07974 New Providence (VI); Vijayan, Kovendhan, Edison, 08817 (US)
(74) Representative: Ipsilon Belgium

(57) **Abstract**

A burst-mode laser driver includes a driver circuit, a switching circuit, and an energy recycling or harvesting circuit. The driver circuit is adapted to be electrically coupled to a burst-mode laser, the driver circuit configured to control a bias current supplied to the burst-mode laser to change the laser between the burst-on and the burst-off state. The switching circuit is electrically coupled to the driver circuit and adapted to switch the bias current between the laser during a burst-on state and a dummy electrical path during a burst-off state. The energy recycling circuit electrically coupled to the switching circuit and is adapted to harvest at least a portion of energy from the bias current during the burst-off state.

## Description

### TECHNICAL FIELD

Various exemplary embodiments disclosed herein relate to laser drivers for use in optical networks, and in particular, to burst mode laser drivers for upstream transmissions in a passive optical network.

### BACKGROUND

Passive optical networks (PONs) provide broadband access. PON's may have a point-to-multi-point (P2MP) topology, in which one optical line terminal (OLT) at the network side (sometimes the network side is called the "central office") is used to connect to a multitude (e.g., 32 or 64) of optical network units (ONUs) at the user side by means of an optical distribution network (ODN), or fiber plant that contains optical fibers and passive optical splitters, but usually no active components.

In order to share the fiber medium, most PON technologies utilize time-division multiplexing (TDM) schemes, in which the fiber medium is shared in the time domain between the different ONUs. In the downstream direction (i.e., transmission from network side to the user side (e.g., from the OLT to the ONUs)), the signal is continuously transmitted from the OLT to all ONUs. In the upstream direction, however, (i.e., transmission from user side to the network side (from the ONUs to OLT)), a time-division multiple-access (TDMA) scheme, also known as burst-mode operation, is employed.

With burst-mode operations, ONUs send burst signals that do not overlap in time with bursts from other ONUs. This mode of operation implies that only one ONU is transmitting in the upstream direction in each timeslot (from the perspective of the receiving OLT). The remaining ONUs remain silent for the duration of the active ONUs timeslot.

The upstream bursts are usually created by controlling the bias current of the laser of the transmitting ONU. Non-transmitting ONUs must have their transmitter off to not interfere with the transmitting ONU. The time it takes to turn the ONU transmitter on and off affects the overhead and therefore the throughput of the upstream transmission, so, in burst-mode, it is desired to turn the lasers on (burst-on state) and off (burst-off state) very fast for minimal overhead.

It is possible to turn off the burst-mode laser driver supply current during the burst-off state of an ONU and turn the burst-mode laser driver supply current back on during burst-on state to save energy. This, however, will typically result in a long turn-on and turn-off times time for the optical signal, which increases the burst-mode overhead and reduces network capacity. Switching off the burst-mode laser driver supply current also results in reduced stability of the burst-mode laser driver circuit, typically leading to extra burst mode overhead.

To address this issue, commercial burst-mode laser drivers typically switch the bias current to a "dummy" load or path (e.g., current sink) during a burst-off state. Switching current to a dummy load achieves the goal of turning the laser on and off quickly but results in a constant power consumption during burst-mode operation independent of the burst duty cycle. The power consumption is by approximation equal to the power consumption in the continuous laser on mode. Thus, even though an optical burst-mode transmitter transmits optical power in bursts, the electrical power consumption is continuous because the burst-mode laser driver supply current is never switched off, but rather, is diverted to a sink.

Since power consumption is important to network operators, there is a need for new and improved burst-mode laser systems.

### SUMMARY OF THE INVENTION

The scope of protection sought for various example embodiments is set out by the independent claims. The embodiments and features described in this specification that do not fall within the scope of the independent claims, if any, are to be interpreted as examples useful for understanding various example embodiments.

Embodiments of the invention include a laser driving circuit that directs the laser current during a burst-off state to an energy recycling mechanism to recover and reuse the power within the BM laser driver circuit, or within the overall system).

In certain embodiments, the laser driving circuit is adapted for use in an optical network unit (ONU) in a PON, and in particular, for burst-mode optical communications in the upstream direction.

According to embodiments of the present invention, a burst-mode laser driver includes a driver circuit, a switching circuit, and an energy recycling or harvesting circuit. The driver circuit is adapted to be electrically coupled to a burst-mode laser, the driver circuit configured to control a bias current supplied to the burst-mode laser to change the laser between the burst-on and the burst-off state. The switching circuit is electrically coupled to the driver circuit and adapted to switch the bias current between the laser during a burst-on state and a dummy electrical path during a burst-off state. The energy recycling circuit electrically coupled to the switching circuit and is adapted to harvest at least a portion of energy from the bias current during the burst-off state.

According to embodiments of the present invention, the harvested energy is discharged to the driver circuit during the burst-on state as to apply at least a portion of the laser bias current necessary to bias the laser.

According to embodiments of the present invention, the harvested energy is discharged to the general power supply of an optical network unit (ONU), as to apply at least a portion of the required power necessary to operate the ONU.

According to embodiments of the present invention, the energy recycling circuit comprises at least one capacitor in parallel with the bias current supply of the driver circuit.

According to embodiments of the present invention, the circuit supply current is reduced as compared to a conventional burst-mode laser, thereby reduces power of the burst-mode laser driver.

According to embodiments of the present invention, the supply current is adapted per burst frame during burst-off state, immediately after a burst, based on a burst-on/burst-off time ratio.

According to embodiments of the present invention, the driver is adapted for upstream communications in a passive optical network (PON) utilizing time-division multiple access.

According to embodiments of the present invention, the switching circuit is further adapted to be coupled with an optical amplifier and the bias current is switched to the laser and the optical amplifier during the burst-on state.

According to embodiments of the present invention, a controller is configured to receive a signal and to switch said switching circuit between the burst-on state and the burst-off state based on a value of the signal.

According to embodiments of the present invention, the laser to be driven is a directly modulated laser or an externally modulated laser.

According to embodiments of the present invention, a burst-mode laser system includes a burst-mode laser, a controller, a driver circuit, a switching circuit, and an energy recycling circuit. The driver circuit is adapted to be electrically coupled to the burst-mode laser, and configured to control a bias current supplied to the burst-mode laser to modulate the laser beam. The switching circuit electrically is coupled to the driver circuit adapted to switch the bias current between the laser during a burst-on state and a dummy electrical path during a burst-off state. The energy recycling circuit electrically coupled to the switching circuit adapted to store at least a portion of energy from the bias current during the burst-off state. The controller is configured to receive a signal and to switch said switching circuit between the burst-on state and the burst-off state based on a value of the signal.

According to embodiments of the present invention, the harvested energy is discharged to the driver circuit during the burst-on state as to apply at least a portion of the laser bias current necessary to bias the laser.

According to embodiments of the present invention, the harvested energy is discharged to the general power supply of an optical network unit (ONU), as to apply at least a portion of the required power necessary to operate the ONU.

According to embodiments of the present invention, the energy recycling circuit comprises at least one capacitor in parallel with the bias current supply of the driver circuit.

According to embodiments of the present invention, the energy recycling circuit comprises at least one capacitor in parallel with the bias current supply of the driver circuit.

According to embodiments of the present invention, the bias current is reduced as compared to a conventional burst-mode laser.

According to embodiments of the present invention, the controller adjusts the bias current per burst frame during burst-off state, immediately after a burst, based on a burst-on/burst-off time ratio.

According to embodiments of the present invention, the system is adapted for upstream communications in a passive optical network (PON) utilizing time-division multiplexing.

According to embodiments of the present invention, the system further comprising an optical amplifier coupled with an optical output of the burst-mode laser, and the switching circuit is further coupled with the optical amplifier, and configured to switch the bias current to the laser and the optical amplifier during the burst-on state.

According to embodiments of the present invention, the laser to be driven is a directly modulated laser or an externally modulated laser.

### BRIEF DESCRIPTION OF DRAWINGS

Embodiments of the present invention are illustrated by way of example with reference to the accompanying drawings Figures (Figs. or FIGS.), which should not be construed to limit the present disclosure.
Figure 1 is a block diagram of a conventional burst-mode laser driver.
Figure 2 is a block diagram of a burst-mode laser driver according to embodiments of the present invention.
Figure 3 is a circuit diagram of an exemplary conventional burst-mode laser driver.
Figure 4 is a circuit diagram for an exemplary burst-mode laser driver according to embodiments of the present invention.
Figure 5(a) is a graph showing results of simulated current flows through a burst-mode laser-driver according to Figure 3 and the total power consumption of the burst-mode laser-driver versus time.
Figure 5(b) a graph showing results of simulated current flows through a burst-mode laser-driver according to Figure 4 and the total power consumption of the burst-mode laser-driver versus time.
Figure 6 is a graph showing simulated power consumption of conventional burst-mode laser-driver of Figure 3 and of burst-mode laser-driver according to Figure 4, versus burst duty cycle.
Figure 7 is a circuit diagram for a second exemplary conventional burst-mode laser driver.
Figure 8 is a circuit diagram for a second exemplary burst-mode laser driver according to embodiments of the present invention.
Figure 9(a) is a graph showing results of simulated current flows through a burst-mode laser-driver according to Figure 7 and the total power consumption of the burst-mode laser-driver versus time.
Figure 9(b) a graph showing results of simulated current flows through a burst-mode laser-driver according to Figure 8 and the total power consumption of the burst-mode laser-driver versus time.
Figure 10 is a graph showing simulated power consumption of conventional burst-mode laser-driver of Figure 7 and of burst-mode laser-driver according to Figure 8, versus burst duty cycle.
Figure 11 is a graph showing adapted bias current for burst duty cycle in case of different burst length per burst frame according to embodiments of the present invention.

### DETAILED DESCRIPTION

The following descriptions are presented to enable any person skilled in the art to create and use apparatuses, systems and methods described herein. It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

Reference throughout this specification to "one embodiment," "an embodiment," or similar language means that a particular feature, structure, or characteristic described in connection with the indicated embodiment is included in at least one embodiment of the present invention. Thus, the phrases "in one embodiment," "in an embodiment," and similar language throughout this specification may, but do not necessarily, all refer to the same embodiment independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

According to embodiments of the invention, a burst-mode laser driver is provided with an energy recycling mechanism to recover and reuse power.

In a burst-mode laser system, switching off the current source in burst-mode laser driver results in reduced stability of the laser driver circuit, typically leading to extra burst-mode overhead and reduced capacity. Therefore, in conventional burst-mode laser driver, current from the current source is switched to a dummy load during a burst-off state rather than turning the current source off.

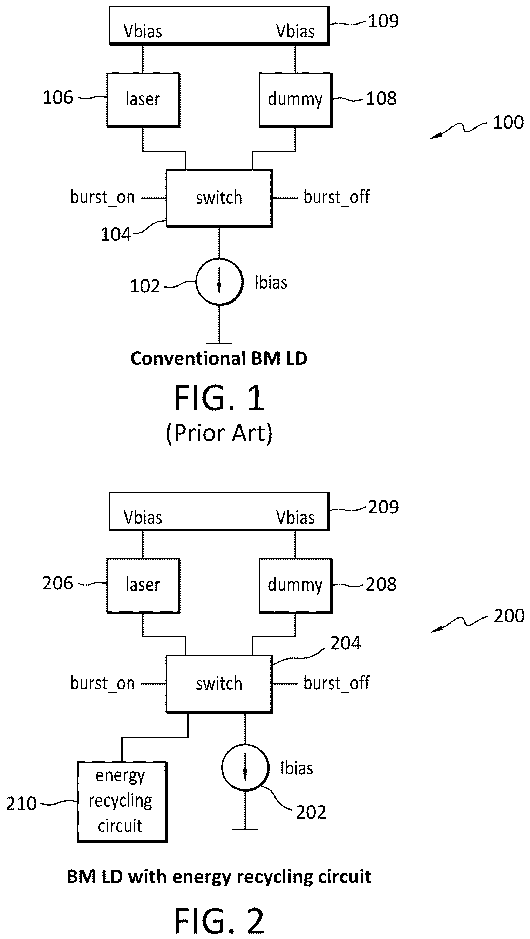

Figure 1 is a block diagram of a conventional burst-mode laser system 100 that could be used in an ONU within a PON. The laser system includes a current source 102, a switch 104, the laser 106 and a dummy load 108, which may be a sink. The switch 104 is adapted to switch the bias current (Ibias) from current source 102 between the laser 106 and the dummy load 108 based on the mode of the optical transmitter, i.e., burst-on or burst-off. Vbias 109 refers to a bias voltage applied to the laser diode (not shown) to set its operating point.

Thus, in the conventional circuit, the current source produces the same current during burst-on and burst-off and power is expended continuously regardless of the mode.

Fig. 2 is a block diagram of an energy-recycling burst-mode laser system 200 with an energy recycling circuit according to embodiments of the present invention. The system includes a current source 202, a switch 204, a laser 206, a dummy path 208 and an energy recycling circuit 210.

During burst-off state of the optical transmitter (i.e., in between the optical bursts), the switch 204 switches the current to both the energy recycling circuit 210 and the dummy load 208 such that the energy recycling circuit 210 stores at least some of the energy, which would otherwise be dissipated in a dummy. Vbias 209 sets the bias voltage applied to a reverse-bias laser diode (not shown) to set its operating point, which is typically used to protect the laser.

The energy recycling circuit preferably stores the energy produced from the current source within one or more electronic components (e.g., capacitors, inductors, supercapacitors, etc.) such that stored energy can be reused by the system to bias the laser 206 during burst-on mode, or for other functions within transmitter or within the ONU as a whole. The skilled person will understand that the circuit may include other electrical components and should be designed to store and release current quickly for burst mode operations. According to embodiments of the present invention, energy is temporarily stored within the energy recycling circuit 210 and is reused to reduce overall power consumption and increase efficiency.

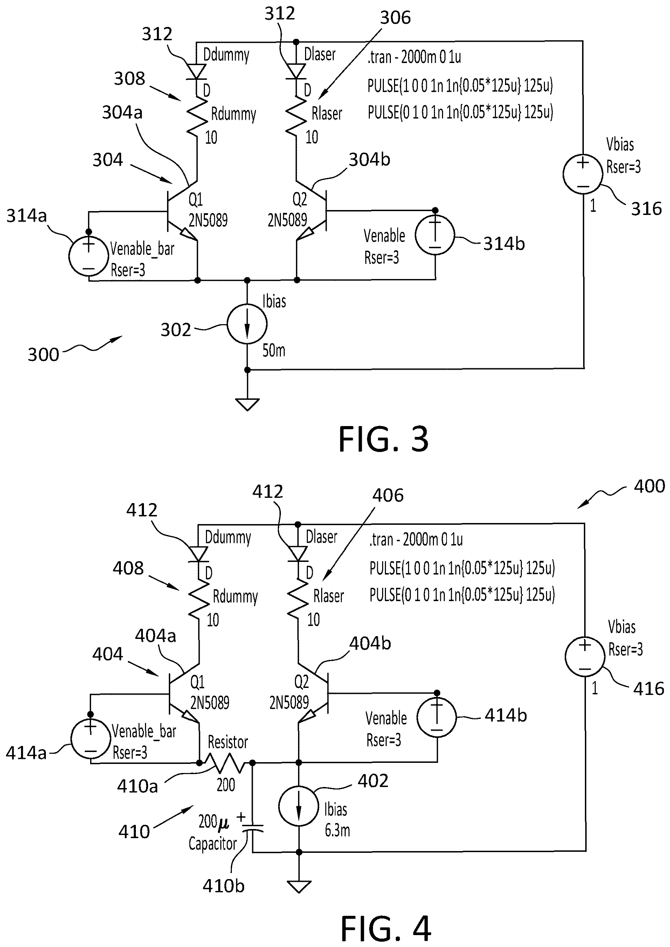

Figure 3 is a circuit diagram illustrating a first example convention burst-mode laser driver. As shown, the driver circuit 300 may include a current source 302 coupled with a switch 304 having 2 transistors 304a and 304b. Transistor 304a is electrically coupled with a dummy load 308 while transistor 304b is electrically coupled with laser 306. Diodes 312 are provided to block current as set according to Vbias 316. V_{enable} voltages or signals may be used for synchronization and control of laser systems, particularly in burst mode operation. V_{enable} voltages may be controlled externally or with a controller or internal circuit. Here, two V_{enable} voltage sources 314a and 314b are provided for switching transistors 304a and 304b on or off. A voltage bias 316 is couples the dummy load 308 and laser 306 to ground in parallel. As shown, Ibias is 50 milliamps and the serial resistance of the circuit is 3 ohms.

In operation, the driver 300 has a continuous power consumption independent of burst-on or burst-off state. The current Ibias through the dummy load 308 during burst-off state is at the same level as the current through the laser 306 during burst-on state.

Figure 4 is a circuit diagram illustrating an exemplary burst-mode laser driver according to embodiments of the present invention. The burst-mode laser driver 400 includes a current source 402 coupled with a switch 404 and an energy recycling circuit 410, which includes a load resistor 410a and an energy storage device, here capacitor 410b, in parallel with current source 402. The switch 404 includes 2 transistors 404a and 404b. Transistor 404a is electrically coupled with a dummy load 408 and energy recycling circuit 410. Transistor 404b is electrically coupled with laser 406 and energy recycling circuit 410. Diodes 412 are provided to block current. Two V_{enable} voltage sources 414a and 414b are provided for switching transistors 402a and 402b on or off. A voltage bias 416 is couples the dummy load 408 and laser 406 to ground (via switch 404 and energy recycling circuit 410) in parallel. As shown, Ibias is only 6.3 milliamps and the serial resistance of the circuit is 3 ohms.

In operation, the driver 400 according to the invention has a varying power consumption that is dependent on the burst mode of the laser. During the burst-off state, at least some of the current that would flow to a dummy load is temporarily stored using the energy recycling circuit 410 to be reused. When the transistors 404a and 404b are switched to burst-on state, the energy stored in the energy recycling circuit 410 may be reused, for example, to deliver at least some current necessary to bias the laser 406, thus allowing the driver to use a smaller current source than a conventional driver. The skilled person will understand that some of the stored energy could be reused for other purposes within the ONU or network.

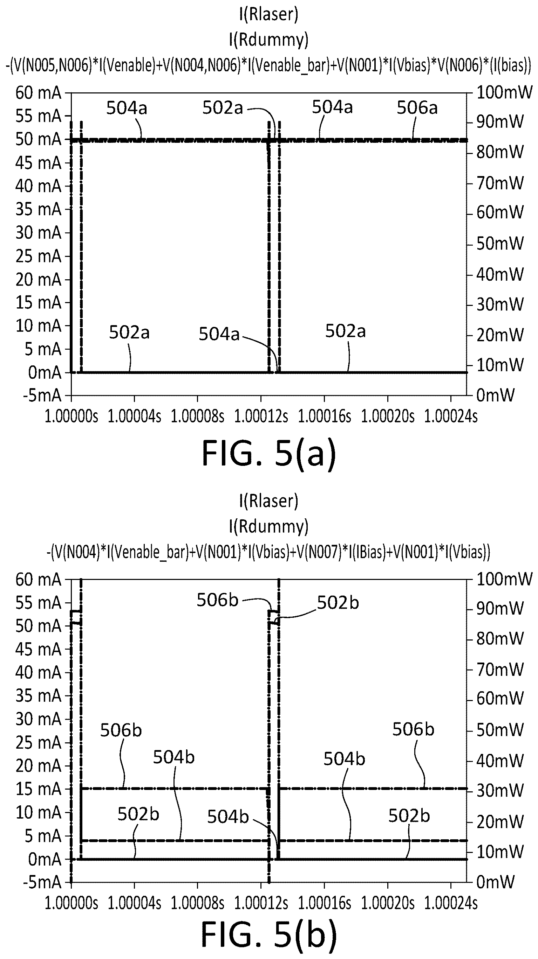

Figures 5(a) and (b) illustrate advantages of the present invention over the conventional burst-mode laser driver. Figure 5(a) graphs simulated current through the laser 502a and the dummy load 504a, and the total power consumption 506a of the circuit of Figure 3 versus time. Figure 5(b) graphs simulated current through the laser 502b and the dummy load 504b, and the total power consumption 506b of the circuit of Figure 4 versus time. In both simulations, the burst duty cycle was set to 0.05 (5%) as shown in Figures 3 and 4. Figures 5(a) and 5(b) were generated using SPICE and the parameters listed in Figures 3 and 4.

As shown in Figure 5(a), the conventional driver 300 has a continuous power consumption 506a that is independent of the burst state of the laser. That is, as shown, the current through the dummy load 504a during burst-off state is at the same level as the current through the laser 502a during burst-on state.

Figure 5(b) shows the simulated current through the laser 502a and the dummy load 504a, and the total power consumption 506a of the circuit of Figure 4 versus time. As shown in Figure 5(b), the power consumption 506a of circuit 400 is high (approximate 90mW) only during the burst-on state, but is much lower (approximately 30mW) during the burst-off state. Moreover, to achieve a 50 mA laser current during burst-on state, the conventional driver 300 needs the current source to be 50 mA, but the inventive driver 400 only needs the current source to be a 6.3 mA because the energy recycling circuit 410 provides additional burst current during the burst-on state.

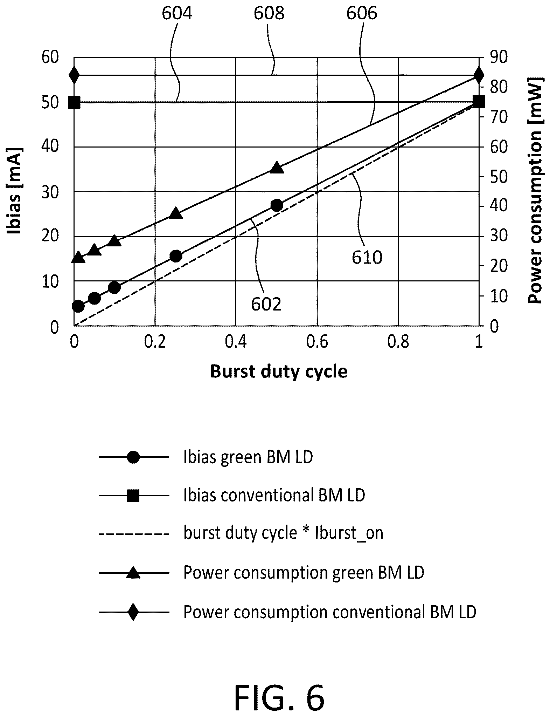

Figure 6 is a graph showing simulated power consumption of conventional burst-mode laser-driver of Figure 3 and of burst-mode laser-driver according to Figure 4, versus burst duty cycle. Fig. 6 graphs the current source current (Ibias) 602 for the energy-recycling burst mode laser driver circuit 400 and Ibias 604 for the conventional circuit 300 versus burst duty cycle (bottom axis). Also graphed is the power consumption 606 of the energy-recycling burst mode laser driver circuit 400 and the power consumption 608 of the conventional circuit 300 versus burst duty cycle. Last, the ideal minimal Ibias 610 for a given burst duty cycle (assuming average current consumption and power), which is calculated by taking the burst duty cycle multiplied by the current during burst-on state, is plotted versus burst duty cycle. Figure 6 shows that the theoretical performance of the energy-recycling burst mode laser driver is quite close to the ideal in the simulation.

Thus, the present invention reduces the power consumption due to reusing energy during burst-on state that was stored during burst-off state. Moreover, the required bias current (Ibias) scales with the burst duty cycle.

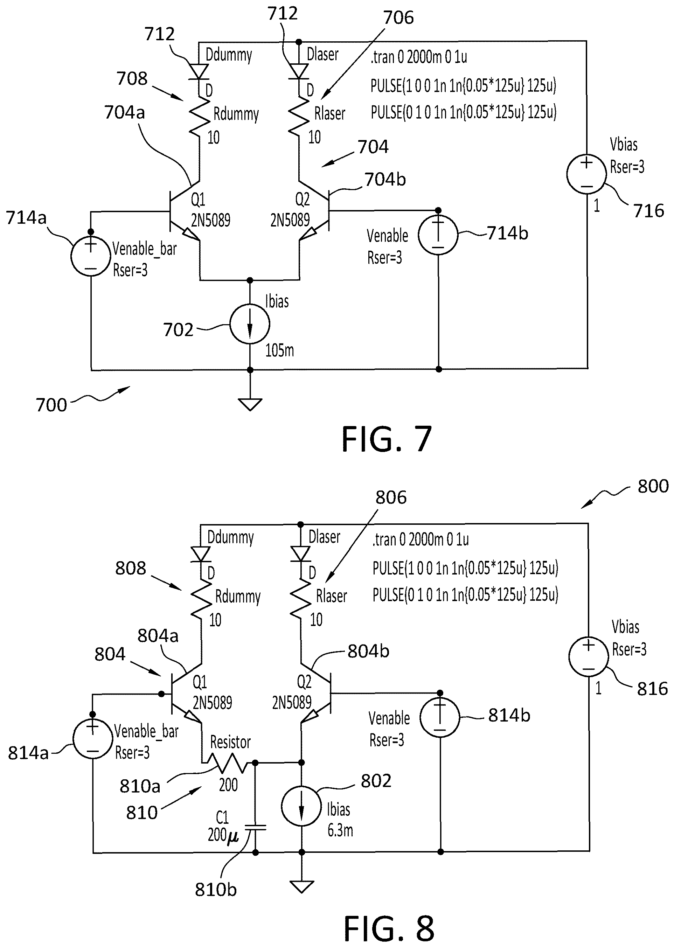

Second example circuits are illustrated in Figures 7 and 8. Figure 7 is a circuit diagram illustrating another convention burst-mode laser driver. As shown, the driver circuit 700 may include a current source 702 coupled with a switch 704 having 2 transistors 704a and 704b. Transistor 704a is electrically coupled with a dummy load 708 while transistor 704b is electrically coupled with laser 706. Diodes 712 are provided to block current as set according to Vbias 716. V_{enable} voltages or signals may be used for synchronization and control of laser systems, particularly in burst mode operation. Here, two V_{enable} voltage sources 714a and 714b are provided for switching transistors 704a and 704b on or off. A voltage bias 716 is couples the dummy load 708 and laser 706 to ground in parallel. As shown, Ibias is 105 milliamps and the serial resistance of the circuit is 3 ohms.

In operation, the conventional driver 700 has a continuous power consumption independent of the burst state of the laser. The current Ibias through the dummy load 708 during burst-off state is at the same level as the current through the laser 706 during burst-on state.

Figure 8 is a circuit diagram illustrating an exemplary burst-mode laser driver according to embodiments of the present invention. The burst-mode laser driver 800 includes a current source 802 coupled with a switch 804 and an energy recycling circuit 810, which includes a load resistor 810a and an energy storage device, here, capacitor 810b in parallel with current course 802. The switch 804 includes 2 transistors 804a and 804b. Transistor 804a is electrically coupled with a dummy load 808 and energy recycling circuit 410. Transistor 804b is electrically coupled with laser 806 and energy recycling circuit 810. Diodes 812 are provided to block current. Two V_{enable} voltage sources 814a and 814b are provided for switching transistors 804a and 804b on or off. A voltage bias 816 is couples the dummy load 808 and laser 806 to ground (via switch 804 and energy recycling circuit 810) in parallel. As shown, Ibias is only 9.1 milliamps, and the serial resistance of the circuit is 3 ohms.

In operation, the driver 800 according to the invention has a power consumption that is dependent on the burst state of the laser. During burst-off state, at least some of the current that would flow via the dummy load during burst-off state is temporarily stored using the energy recycling circuit 810. When the transistors 802a and 802b are switched to burst-on state, the energy stored in the energy recycling circuit 810 may be used to deliver at least some current necessary to bias the laser 806, thus allowing to reduce the current source driving the circuit. The skilled person will understand that some or all of the stored energy could be used for other purposes as well.

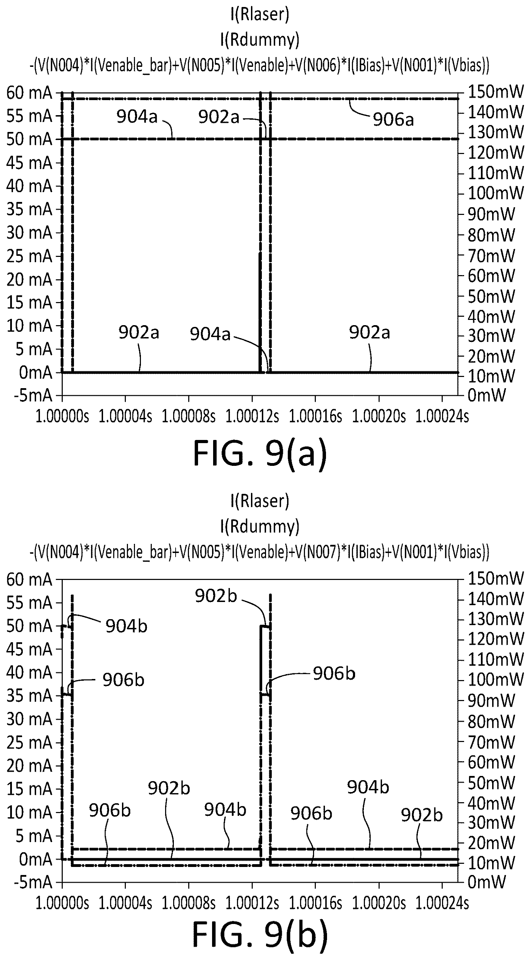

Figures 9(a) and (b) illustrate the advantages of the present invention according to this second example over the conventional burst-mode laser driver. Figure 9(a) shows the simulated current through the laser 902a and the dummy load 904a, and the total power consumption 906a of the circuit of Figure 7 versus time. Figure 9(b) shows the simulated current through the laser 902b and the dummy load 904b, and the total power consumption 906b of the circuit of Figure 8 versus time. In both simulations, the burst duty cycle was set to 0.05 (5%) as shown in Figures 7 and 8. Simulated current was generated using SPICE and the parameters listed in Figures 7 and 8.

As shown in Figure 9(a), the circuit 700 has a continuous power consumption 906a independent of burst-on or burst-off state. The current 904a through the dummy load during burst-off state is at the same level as the current 902a through the laser during burst-on state.

Figure 9(b) shows the simulated current 902b through the laser and the current 904b through the dummy load, and the total power consumption 906a of the circuit of Figure 8 versus time.

As shown in Figure 9(b), the power consumption 906b of circuit 800 is high (approximate 90mW) only when the circuit 800 is first powered on and during the burst-on state, but is nearly zero during the burst-off state. To achieve a 50 mA laser current during burst-on state, the conventional driver 700 needs the current source to be 105 mA, but the inventive driver 800 only needs the current source to be at 9.1 mA. This is a result of the energy recycling circuit 810 which provides additional burst current during the burst-on state.

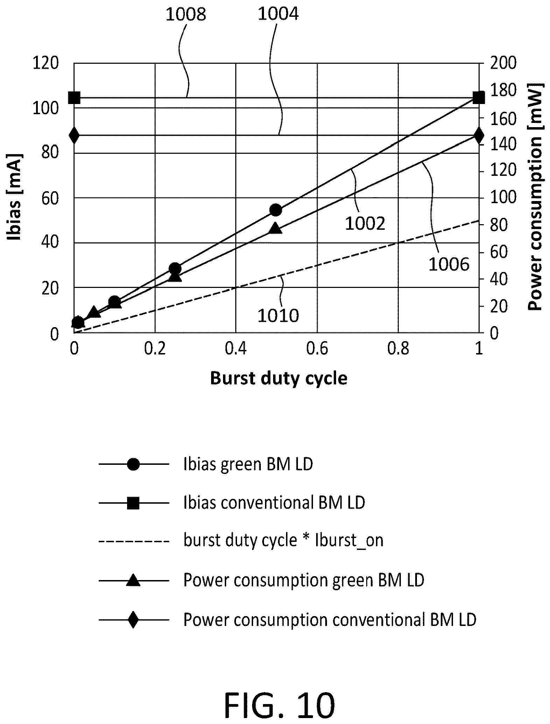

Figure 10 is a graph showing simulated power consumption of conventional burst-mode laser-driver of Figure 7 and of inventive burst-mode laser-driver according to Figure 8, versus burst duty cycle. Fig. 10 graphs the current source current (Ibias) 1002 for the energy-recycling burst mode laser driver circuit 800 and Ibias 1004 for the conventional circuit 700 versus burst duty cycle (bottom axis). Also graphed is the power consumption 1006 of the energy-recycling burst mode laser driver circuit 800 and the power consumption 1008 of the conventional circuit 700 versus burst duty cycle. Finally, burst duty cycle multiplied by the current during burst-on state 1010 versus burst duty cycle, which equates to the ideal minimal Ibias for a given burst duty cycle (assuming average current consumption and power), is plotted to further illustrate that the performance of the energy-recycling burst mode laser driver is quite close to ideal in the simulation.

As the simulation shows, the present invention can significantly reduce the power consumption of a burst-mode laser system due to reusing energy during burst-on state which was stored during burst-off state. According to embodiments of the invention, the required bias current (Ibias) is scalable with the burst duty cycle.

The above-described example implementations of an energy recycling burst-mode laser driver includes circuits to reuse the energy stored within the driver itself. It would be understood by the skilled person that it would also be possible to reuse the energy elsewhere in the optical network unit (ONU) with adaptations to the driver circuit.

According to embodiments of the present invention, the burst-mode laser driver can be applied to burst-mode transmitters based on directly modulated laser (DML) as well as electro-absorption modulated laser (EML) with a semiconductor optical amplifier (SOA) (EML/SOA) or DML/SOA. In the SOA cases, the bursted current biases the SOA to create optical bursts.

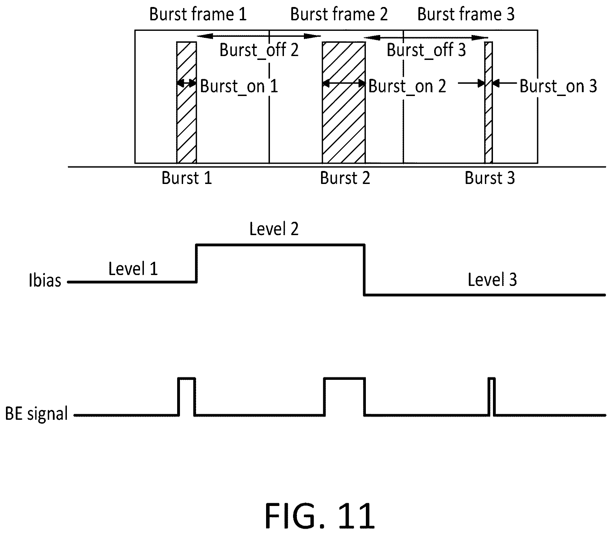

According to embodiments of the invention, the bias current may be adapted to the burst duty cycle. At the ONU, this can be implemented by, for example, deriving the correct Ibias from a burst enable (BE) signal that is sent to (e.g., from the OLT) or otherwise available in the ONU (e.g., could be from the bandwidth map provided within the ONU or sent to the ONU (e.g., from the OLT)). When the burst duty cycle is constant, the bias current can be allowed or controlled to stay the same. When traffic from an ONU increases (larger burst duty cycle), the bias current may be increased. According to embodiments of the invention, adaptation of the bias current can be accomplished per burst frame right after a burst (during burst-off state) based on burst-on/burst-off ratio without affecting the optical bursting performance. This is illustrated in an example in Figure 11.

Figure 11 is an exemplary graph showing how bias current can be adapted for a varying burst duty cycle, in case of different burst length per burst frame, according to embodiments of the present invention. In Figure 11, three burst frames are shown on the top. Bias current (Ibias) is shown in the middle of the graph for each burst frame. And a burst enable signal (BE signal) is shown on the bottom of the graph. The burst enable signal (BE signal) may be derived within an ONU or received (e.g., from an OLT), and corresponds to the length of the burst frame.

As shown, Ibias is adapted for 3 different burst lengths in 3 burst frames. The highest Ibias, marked as Level 2, is for largest burst-on/burst-off ratio (burst-on 2/burst-off 2) and lowest Ibias (Level 3) is for smallest burst-on/burst-off ratio (burst-on 3/burst-off 3). As shown, Ibias may be increased at the point of the burst-off signal, so that power can be stored in the driver circuits recycling mechanism and used during the corresponding burst. One will understand that the bias current can be calculated to provide the necessary current to the laser based on burst-on/burst-off ratio. Thus, for shorter bursts, less current is necessary (compare Level 3 and Level 2).

The current necessary can be stored in the ONU or transmitted to the ONU by the OLT, or derived within the ONU (e.g., based on a bandwidth map). A controller can be provided within the ONU for adjusting the bias current Ibias.

Although specific embodiments of the invention have been described and illustrated, the invention is not to be limited to the specific forms or arrangements of parts so described and illustrated. The scope of the invention is to be defined by the claims appended hereto and their equivalents.

### List of abbreviations

The following abbreviations were used herein and are given the following meanings: BMLD = burst mode laser driver
ONU = optical network unit
DML = directly modulated laser
SOA = semiconductor optical amplifier
EML = electro-absorption modulated laser

In this description, numerous details are set forth for the purpose of explanation. However, one of ordinary skill in the art will realize that the invention may be practiced without the use of these specific details. In other instances, well-known structures and processes are shown in block diagram form in order not to obscure the description of the invention with unnecessary detail. Thus, the present disclosure is not intended to be limited to the embodiments shown, but is to be accorded the widest scope consistent with the principles and features disclosed herein.

In describing exemplary embodiments, specific terminology is used for the sake of clarity. For purposes of description, each specific term is intended to at least include all technical and functional equivalents that operate in a similar manner to accomplish a similar purpose. Additionally, in some instances where a particular exemplary embodiment includes a plurality of system elements, device components or method steps, those elements, components or steps may be replaced with a single element, component or step. Likewise, a single element, component or step may be replaced with a plurality of elements, components or steps that serve the same purpose. Moreover, while exemplary embodiments have been shown and described with references to particular embodiments thereof, those of ordinary skill in the art will understand that various substitutions and alterations in form and detail may be made therein without departing from the scope of the invention. Further still, other embodiments, functions and advantages are also within the scope of the invention.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A burst-mode laser driver, comprising:
a driver circuit (400, 700, 800) adapted to be electrically coupled to a burst-mode laser, the driver circuit configured to control a bias current supplied to the burst-mode laser to change the laser between the burst-on and the burst-off state;
a switching circuit (404, 704, 804) electrically coupled to the driver circuit adapted to switch the bias current between the laser during a burst-on state and a dummy electrical path during a burst-off state; and
an energy recycling circuit (410, 810) electrically coupled to said switching circuit adapted to harvest at least a portion of energy from said bias current during said burst-off state.

2. The burst-mode laser driver according to claim 1, wherein the harvested energy is discharged to said driver circuit during said burst-on state as to apply at least a portion of the laser bias current necessary to bias the laser.

3. The burst-mode laser driver according to claim 1, wherein the harvested energy is discharged to the general power supply of an optical network unit (ONU), as to apply at least a portion of the required power necessary to operate the ONU.

4. The burst-mode laser driver according to claim 2, wherein said energy recycling circuit comprises at least one capacitor (410b, 810b) in parallel with the bias current supply (402, 702, 802) of said driver circuit.

5. The burst-mode laser driver according to claim 2, wherein said circuit supply current is reduced as compared to a conventional burst-mode laser, thereby reduces power of said burst-mode laser driver.

6. The burst-mode laser driver according to claim 2, wherein the supply current is adapted per burst frame during burst-off state, immediately after a burst, based on a burst-on/burst-off time ratio.

7. The burst-mode laser driver according to claim 1, wherein said driver is adapted for upstream communications in a passive optical network (PON) utilizing time-division multiple access.

8. The burst-mode laser driver according to claim 1, wherein said switching circuit further adapted to be coupled with an optical amplifier and the bias current is switched to the laser and the optical amplifier during the burst-on state.

9. The burst-mode laser driver according to claim 1, further comprising a controller configured to receive a signal and to switch said switching circuit between said burst-on state and said burst-off state based on a value of said signal.

10. The burst-mode laser driver according to claim 1, used in combination with a directly modulated laser or an externally modulated laser.

11. A burst-mode laser system, comprising:
a burst-mode laser;
a controller;
a driver circuit (400, 700, 800) adapted to be electrically coupled to said burst-mode laser, the driver circuit configured to control a bias current supplied to the burst-mode laser to modulate the laser beam;
a switching circuit (404, 704, 804) electrically coupled to the driver circuit adapted to switch the bias current between the laser during a burst-on state and a dummy electrical path during a burst-off state; and
an energy recycling circuit (410, 810) electrically coupled to said switching circuit adapted to store at least a portion of energy from said bias current during said burst-off state;
wherein said controller is configured to receive a signal and to switch said switching circuit between said burst-on state and said burst-off state based on a value of said signal.

12. The burst-mode laser system according to claim 11, wherein the harvested energy is discharged to said driver circuit during said burst-on state as to apply at least a portion of the laser bias current necessary to bias the laser.

13. The burst-mode laser system according to claim 11, wherein the harvested energy is discharged to the general power supply of an optical network unit (ONU), as to apply at least a portion of the required power necessary to operate the ONU.

14. The burst-mode laser system according to claim 11, wherein said bias current is reduced as compared to a conventional burst-mode laser.

15. The burst-mode laser system according to claim 11, further comprising an optical amplifier coupled with an optical output of said burst-mode laser, and wherein said switching circuit is further coupled with the optical amplifier, and wherein switching circuit is configured to switch the bias current to the laser and the optical amplifier during the burst-on state.
